Europäisches Patentamt

European Patent Office

Office européen des brevets

(11) Publication number: **0 208 032**
**A1**

# EUROPEAN PATENT APPLICATION

(21) Application number: 85304904.7

(22) Date of filing: 09.07.85

(51) Int. Cl.⁴: **C21C 7/00**

(43) Date of publication of application:
14.01.87 Bulletin 87/03

(84) Designated Contracting States:
BE DE FR GB IT

(71) Applicant: NIPPON KOKAN KABUSHIKI
KAISHA
1-2 Marunouchi 1-chome Chiyoda-ku
Tokyo 100(JP)

(72) Inventor: Tsubaki, Hajime
2-423-6, Maruko-dori Nakahara-ku
Kawasaki-shi Kanagawa-ken(JP)
Inventor: Mizui, Kiyoshi
2396 Hiyoshihoncho Kohoku-ku
Yokohama-shi Kanagawa-ken(JP)

(74) Representative: Wood, Anthony Charles et al
c/o MICHAEL BURNSIDE & PARTNERS 2
Serjeants' Inn Fleet Street
London EC4Y 1HL(GB)

(54) Metallurgical recarburizing material.

(57) A metallurgical recarburizing material produced
by proportioning fine coke and fine powder iron
which are 1mm or less in particle size, adding and
mixing a binder with the proportioned fine coke and
iron and forming the mixture into pellets or bri-
quettes. The material can be effectively added to a
metallurgical furnace such as a steelmaking electric
furnace.

EP 0 208 032 A1

# METALLURGICAL RECARBURIZING MATERIAL

The present invention relates to a metallurgical recarburizing material which is suitable for use in metallurgical furnaces, e.g., steelmaking electric furnaces.

Generally, in the refining of high-carbon steel by means of a metallurgical furnace such as an electric furnace for steelmaking, it has been the practice to adjust the carbon content of the steel being produced by the addition of a recarburizing material. While pig iron, lump coke, fine coke, graphite, anthracite, etc., are the forms in which such recarburizing material is used for this purposes, the use of pig iron is disadvantageous in that although the pig iron is a recarburizing material having a high degree of carbon yield, the carbon content is as low as about 4% thus increasing the amount of pig iron addition and also the pig iron is lumpy and large in size thus requiring a longer melting and reaction time and increasing the cost. Also, lump coke and fine coke are both low in specific gravity and therefore they float to the surface of the molten steel during the steelmaking thus showing a low carbon yield of 10 to 20%. Moreover, the use of coke as a recarburizing material is disadvantageous in that the coke cannot be handled by the lifting magnet which is used for charging the principal raw materials thus requiring the additional provision of a special charging device and so on. In this connection, while it is conceivable to use fine coke by blowing it into the furnace through the injection pipe, the use of fine coke has the disadvantage of reaching only a shallow place in the molten steel thus deteriorating the environment and keeping the carbon yield as low as ever in addition to the previously mentioned disadvantage.

It is the primary object of the present invention to provide an improved metallurgical recarburizing material which overcomes the foregoing deficiencies of the conventional recarburizing materials.

It is another object of the invention to provide a metallurgical recarburizing material which can be used in steel making electric furnaces and the like with a high degree of carbon yield and which can be handled by the lifting magnet or the like.

Thus, the present invention resides in the production of a recarburizing material by the use of very fine particles of powder coke produced in an iron works or the like and limited in uses due to their fine particle sizes and very fine particles of collected fine iron such as the converter OG dust and its gist consists in the production of a metallurgical recarburizing material which comprises proportioning fine coke and fine iron having particle sizes of 1.0mm or less, adding and mixing a binder with the proportioned fine coke and iron and molding the mixture.

With a view to overcoming the foregoing deficiencies of the conventional metallurgical recarburizing materials, the inventor has noted the fine particles of coke collected in the course of the production of coke, e.g., in the coke dry quenching station (CDQ) in an iron works and the fine particles of iron, e.g., the convertor OG dust and has made studies on the use of these dust thereby making the invention.

In other words, the invention consists in proportioning fine coke of 1.0mm or less and fine powder iron of 1.0mm or less in proper amounts depending on the amount of carbon to be added, the desired after-mold crushing strength and the mold specific gravity, adding and mixing a binder therewith and pressure molding the mixture by a pressure molding machine such as a double-roll type briquetting machine or forming the mixture into pellets by a pelletizer.

While the iron contained in the fine powder iron should preferably takes a metallic form so as to be used as a source of iron, the OG dust and the like, for example, are highly reactive and tend to be reoxidized during the production of briquet and therefore it is desirable to maintain the metallic Fe by the addition of a rust preventive agent such as polyphosphoric acid, tannic acid, boric acid or sulfonate.

If the oxygen content of the fine powder iron is large, a bumping phenomenon will be caused in an electric furnace and thus it can be added only in very small amount if iron oxide is charged. Therefore, it is desirable that the content of metallic Fe is 50% or over and preferably between 60 and 70% by weight. In order to ensure effective utilization of the metallic Fe contained in the fine powder iron, it is desirable that the proportioning ratio of the fine coke and the fine powder iron is in the range of 1:5 to 5:9.

While various binders such as asphalt group binders, pitch groups binders and corn starch may be used, it is desirable to add an asphalt group or pitch group binder in an amount between 1 and 10%, preferably between 2 and 8% from the standpoint of the crushing strength as well as the carbon adjustment of the recarburizing material. While a crushing strength of 40 Kg/piece is sufficient for the ordinary recarburizing materials for electric furnaces, the metallurgical recarburizing material provided in accordance with the invention has a sufficient strength of 100 Kg/piece or over.

Also, the material may be formed into any desired shape, such as, briquettes or pellets.

The metallurgical molded recarburizing material provided in accordance with the invention is a suitable material for use in metallurgical furnaces and it has the following great effects.

1) By controlling the addition of fine powder iron in any given proportion to the amount of fine coke, the density of the resulting recarburizing material can be controlled at 1 to 6 and therefore the required carbon can be effectively added into a steelmaking metal bath.

2) Since the carbonaceous material essentially consists of fine coke and the surface area is large, a high degree of recarburizing reactivity is ensured in the metal bath.

3) Since the size and shape of the molded pieces can be controlled as desired, the optimum size and shape can be obtained to suit the conditions, i.e., depth and width of the metal bath.

4) Since the fine carbonaceous material and the fine powder iron are intimately contacted with each other and distributed uniformly, a part of the iron oxide is reduced and becomes an effective source of iron.

5) As compared with the use of commercially available scrap as a source of iron, the material includes no such impurities (tramp elements) as Cu, Sn, Cr and Zn and it proves to be a source of good quality iron.

6) When used in a metallurgical furnace such as an electric furnace, the material has a sufficient charging material strength.

The present invention will be illustrated further by the following example.

Compositions were prepared by proportioning converter OG dust (particle size was 1mm or less in particle diameter with 0.02 to 0.5mm from 60 to 70% M-Fe) and coke quenching station collected dust or CDQ dust (V.M: 0.6%, particle size of 1mm or less) obtained from an iron works and an asphalt group binder or propane deasphalting asphalt - (PDA) was added as a binder and mixed with the compositions. The resulting mixtures were molded by a double roll-type molding machine (mold: 53mm x 53nm x 14mm -47cc, mascheque Type R15) and the physical properties of the thus obtained recarburizing materials were measured.

The proportions of the constituents in the different types of the recarburizing material are shown in Table 1 and their physical properties are shown in Table 2.

Table 1        Relative Proportions

| | No. 1 | No. 2 | Note |
|---|---|---|---|
| converter OG dust | Dry weight 60 Wt.% | Dry weight 50 Wt.% | 30 Kg of each type was tested |
| CDQ fine coke | Dry weight 40 Wt.% | Dry weight 50 Wt.% | |
| P.D.A | 6% | 8 % | |

Table 2          Physical Properties

|  | | No. 1 | No. 2 | Note |
|---|---|---|---|---|
| Crushing strength | $\overline{X}$ | 110 Kg/piece | 130 Kg/piece | 1 hour after molding (average of 20 pieces) |
|  | R | 15 Kg/piece | 18 Kg/piece | |
| Weight per piece | | 113.0 g/piece | 95.7 g/piece | (Average of 20 pieces) |
| Product water content | | 3.0% | 3.3% | Left to stand in natural condition for 1 hour after molding |
| Apparent specific gravity | | 2.71% | 2.3% | |

It has been proved that the recarburizing materials obtained are satisfactory as recarburizing materials for use in electric furnaces, etc.

**Claims**

1. A metallurgical recarburizing material produced by proportioning fine coke having a particle size of 1mm or less and fine powder iron having a particle size of 1mm or less, adding and mixing a binder with said proportioned fine coke and iron and then molding said mixture.

2. A material according to claim 1, wherein said fine coke and said fine powder iron are proportioned in the ratio between 1:5 and 5:9.

3. A material according to claim 1, wherein said fine powder iron contains 50% by weight or more of metallic Fe.

4. A material according to claim 2, wherein said fine powder iron contains 60 to 70% by weight or more of metallic Fe.

5. A material according to claim 1, wherein said fine powder iron comprises converter OG dust.

6. A material according to claim 1, wherein said fine coke comprises coke quenching station collected dust (CDQ) or bag filter dust.

7. A material according to claim 1, wherein said binder comprises a substance selected from the group consisting of asphalt group binders, pitch group binders and corn starch.

8. A material according to claim 1, wherein 1 to 10% of an asphalt group binder consisting of propane deasphalt is added and mixed as said binder.

9. A material according to claim 8, wherein said propane deasphalting asphalt is added and mixed in an amount between 2 and 8%.

10. A material according to claim 1, wherein a rust preventive agent is added during said mixing.

11. A material according to claim 10, wherein said rust preventive agent comprises a substance or a combination of substances selected from the group consisting of polyphosphoric acid, tannic acid, boric acid and sulfonate.

12. A material according to claim 1, wherein said mixture is formed into pellets or briquettes.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 233 230 (BERGWERKSVERBAND) * claim * | 1 | C 21 C 7/00 |
| A | DE-C- 161 610 (ELECTRO-METALLURGIQUE) | | |
| A | DE-B-1 904 195 (BERGWERKSVERBAND) | | |
| A | DE-A-3 101 168 (VFT) | | |
| A | US-A-4 497 661 (VALENTI) | | |
| A | STAHL UND EISEN, vol. 85, no. 7, 8th April 1965, page 420, table 3, Düsseldorf; "O.G. Staub" | | TECHNICAL FIELDS SEARCHED (Int. Cl.4)  C 21 C 7/00 |

The present search report has been drawn up for all claims

| Place of search | Date of completion of the search | Examiner |
|---|---|---|
| BERLIN | 31-01-1986 | SUTOR W |